(19) **Europäisches Patentamt European Patent Office Office européen des brevets**

(11) **EP 3 236 280 B1**

(12) **FASCICULE DE BREVET EUROPEEN**

(45) Date de publication et mention de la délivrance du brevet:
**01.01.2020 Bulletin 2020/01**

(51) Int Cl.:
***G01S 7/41*** *(2006.01)*    ***G01S 13/91*** *(2006.01)*

(21) Numéro de dépôt: **17165289.4**

(22) Date de dépôt: **06.04.2017**

(54) **CALCUL AUTOMATIQUE D'UNE DIMENSION D'UNE PLATEFORME MOBILE**

AUTOMATISCHE BERECHNUNG EINER ABMESSUNG EINER MOBILEN PLATTFORM

AUTOMATIC CALCULATION OF A DIMENSION OF A MOBILE PLATFORM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.04.2016 FR 1600650**

(43) Date de publication de la demande:
**25.10.2017 Bulletin 2017/43**

(73) Titulaire: **THALES**
**92400 Courbevoie (FR)**

(72) Inventeurs:
• **GUERRINI, Gilles**
**33608 Pessac Cedex (FR)**
• **CORRETJA, Vincent**
**33608 Pessac Cedex (FR)**
• **MONTIGNY, Richard**
**33608 Pessac Cedex (FR)**

(74) Mandataire: **Lavoix**
**2, place d'Estienne d'Orves**
**75441 Paris Cedex 09 (FR)**

(56) Documents cités:
**EP-A2- 2 523 016**     **FR-A1- 2 695 742**
**US-A1- 2003 142 007**   **US-A1- 2004 140 927**
**US-A1- 2010 052 977**   **US-B1- 6 337 654**

• LIAO KUO ET AL: "Extraction of Radar Target Length Based on High Resolution Range Profile", ELECTRICAL AND CONTROL ENGINEERING (ICECE), 2010 INTERNATIONAL CONFERENCE ON, IEEE, PISCATAWAY, NJ, USA, 25 juin 2010 (2010-06-25), pages 956-959, XP031797655, ISBN: 978-1-4244-6880-5
• MUSMAN S ET AL: "Automatic Recognition of ISAR Ship Images", IEEE TRANSACTIONS ON AEROSPACE AND ELECTRONIC SYSTEMS, IEEE SERVICE CENTER, PISCATAWAY, NJ, US, vol. 32, no. 4, 1 octobre 1996 (1996-10-01), pages 1392-1404, XP011081057, ISSN: 0018-9251, DOI: 10.1109/7.543860
• GOUAILLIER V ET AL: "Ship Silhouette Recognition Using Principal Components Analysis", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, vol. 3164, 1 janvier 1997 (1997-01-01), pages 59-69, XP002413964, DOI: 10.1117/12.279572 ISBN: 978-1-62841-730-2

Remarques:
Le dossier contient des informations techniques présentées postérieurement au dépôt de la demande et ne figurant pas dans le présent fascicule.

**Description**

La présente invention concerne un procédé de calcul automatique d'une dimension d'une plateforme mobile, ladite dimension étant une dimension de longueur ou une dimension de largeur, et un système associé.

L'invention se situe dans le domaine de la surveillance, en particulier de la surveillance maritime lorsque la plateforme considérée est un navire.

Dans le contexte de la surveillance maritime, les navires fournissent des informations auto-déclaratives qui donnent l'identification, la position, la route et les dimensions (longueur et largeur) d'un navire, selon un système d'identification automatique, connu sous l'acronyme AIS (« Automated Identification System »).

Il est utile d'être en mesure de vérifier ces informations fournies par un navire, afin de détecter des navires suspects, dans un contexte civil ou militaire.

A cet effet, on connaît l'utilisation d'informations fournies par un système radar. De manière connue, un système radar comporte un émetteur apte à émettre des ondes électromagnétiques radio et, un récepteur d'ondes électromagnétiques radio réfléchies, et des moyens de calcul permettant de déterminer, la puissance rétrodiffusée par une cible en fonction de la distance entre cette dernière et le radar.

Un tel mode de fonctionnement d'un système radar est connu sous le nom de mode « range-profile ». La définition du range-profile correspond à la représentation de la puissance rétrodiffusée par la plateforme détectée en fonction de la distance. Le Range-Profile d'une cible ne peut s'établir qu'à partir du moment où elle a été détectée auparavant à l'aide d'un mode de détection.

Dans l'état de la technique, il est connu de fournir un signal de type « range-profile » à un opérateur, sur une interface graphique de visualisation, l'opérateur étant alors apte à déplacer des curseurs sur l'interface graphique pour effectuer une estimation manuelle d'une dimension, par exemple la longueur, du navire observé.

En effet, en fonction du positionnement du système radar par rapport à l'axe du navire observé, le système radar permet de détecter la longueur ou la largeur du navire, ou plus généralement de la plateforme observée.

Il est possible alors pour l'opérateur de comparer la dimension calculée à une dimension correspondante, obtenue à partir de l'identifiant AIS reçu du navire observé.

Cependant, une telle opération manuelle prend du temps à l'opérateur, et de plus peut présenter des imprécisions.

Le document « Extraction of Radar Target Length Based on High Resolution Range Profile » de Liao Kuo et al, publié dans International Conférence on Electrical and Control Engineering 2010 décrit une méthode de calcul de longueur de cible mobile par un système radar. La cible est typiquement un aéronef.

Le document « Automatic Recognition of ISAR Ship Images » de S. Musman et al, publié dans IEEE Transactions on Aerospace and Electronic Systems, vol. 32, no. 4, 1996, décrit des méthodes de reconnaissance automatique d'images ISAR de navires.

En plus, dans le contexte maritime, les mesures radar sont bruitées à cause de l'environnement (présence de fouillis de mer), et donc il est difficile pour un opérateur humain d'exploiter efficacement un signal bruité affiché sur une interface graphique.

Il est donc souhaitable d'automatiser l'estimation de dimensions d'une plateforme mobile telle qu'un navire, pour éviter les aléas précités.

De manière plus générale, dans le domaine de la surveillance à distance, il est souhaitable de pouvoir estimer automatiquement des dimensions d'une plateforme en mouvement, notamment dans des milieux dans lesquels les mesures radar sont bruitées.

A cet effet, selon un premier aspect, l'invention propose, un procédé de calcul automatique d'une dimension d'une plateforme mobile selon la revendication 1.

Avantageusement, le procédé de l'invention permet, grâce à l'application d'un opérateur de filtrage, d'obtenir un signal filtré qui permet de minimiser l'influence du bruit et du fouillis de mer, et de traiter automatiquement ce signal filtré pour obtenir une dimension de la plateforme observée.

Le procédé de calcul automatique d'une dimension d'une plateforme mobile selon l'invention peut présenter une ou plusieurs des caractéristiques revendiquées dans les revendications dépendantes 2 à 10.

Selon un autre aspect, l'invention concerne un programme d'ordinateur comportant des instructions logicielles qui, lorsqu'elles sont mises en œuvre par un dispositif programmable, mettent en œuvre un procédé de calcul automatique d'une dimension d'une plateforme mobile, ladite dimension étant une dimension de longueur ou une dimension de largeur, tel que brièvement décrit ci-dessus.

Selon un autre aspect, l'invention concerne un support d'enregistrement d'informations, comportant des instructions logicielles pour l'exécution d'un procédé de calcul automatique d'une dimension d'une plateforme mobile tel que brièvement décrit ci-dessus, lorsque ces instructions sont exécutées par un dispositif programmable.

Selon un autre aspect, l'invention concerne un système de calcul automatique d'une dimension d'une plateforme mobile apte à mettre en œuvre un procédé tel que brièvement décrit ci-dessus, tel que revendiqué dans la revendication 13.

D'autres caractéristiques et avantages de l'invention ressortiront de la description qui en est donnée ci-dessous, à titre indicatif et nullement limitatif, en référence aux figures annexées, parmi lesquelles :

- la figure 1 est une vue schématique de dessus d'un cas d'utilisation de la présente invention, comprenant une plateforme et une antenne d'émission/réception de dispositif radar ;

- la figure 2 est un exemple de signal radar acquis avant et après filtrage de débruitage ;
- la figure 3 est un synoptique des principales étapes d'un procédé de calcul de dimension d'une plateforme selon un mode de réalisation ;
- la figure 4 est un synoptique des principales étapes mises en œuvre pour l'estimation automatique de distances radiales correspondant à une plateforme dans un mode de réalisation ;
- les figures 5 à 7 illustrent des histogrammes de valeurs de longueur radiale estimées.

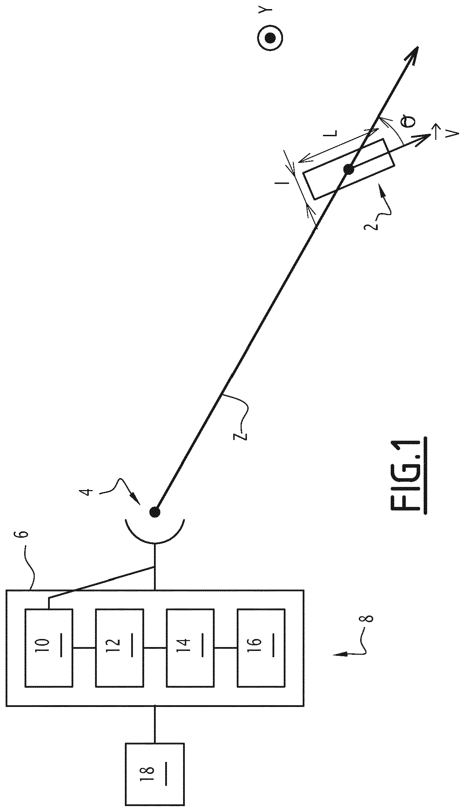

La figure 1 illustre schématiquement en vue de dessus une plateforme 2, par exemple un navire en cours de navigation en mer, dont on cherche à évaluer une des dimensions parmi sa longueur L et sa largeur l.

La plateforme 2 est schématisée, et représentée sous forme d'un rectangle en vue du dessus.

On définit la longueur L et la largeur l d'une plateforme réelle par les dimensions correspondantes d'un rectangle circonscrit à la plateforme, en vue du dessus.

Lorsque la plateforme 2 est en mouvement, ce mouvement est caractérisé par un vecteur de vitesse $\vec{V}$.

Une antenne 4 d'émission/réception d'ondes radio électromagnétiques, faisant partie d'un système radar 8, est apte à émettre des ondes radio électromagnétiques en direction de la plateforme 2 et à recevoir des ondes réfléchies par toute structure réfléchissante rencontrée.

Dans l'exemple de la figure 1, l'axe d'émission ou direction de pointage de l'antenne 4 est référencé Z.

L'axe Z forme avec la direction du vecteur de vitesse $\vec{V}$ de la plateforme 2 un angle $\theta$.

L'antenne 4 est couplée à un dispositif radar 6, l'ensemble des éléments 4 et 6 formant le système radar 8.

De manière connue, le système radar 8 est adapté à déterminer la valeur du vecteur de vitesse $\vec{V}$ de la plateforme 2 projeté sur l'axe Z.

Le système radar 8 est adapté à acquérir un signal numérique dit « range profile », représentant la puissance du signal réfléchi en réponse à un signal radio électromagnétique émis, en fonction de la distance par rapport à un point de référence de l'antenne 4.

Le dispositif radar 6 comporte notamment des modules émetteur/récepteur 10, des modules 12 de modulation/démodulation des signaux, une unité 14 de calcul et de traitement comportant un processeur et apte à effectuer des calculs lorsque le dispositif 6 est mis sous tension, une ou plusieurs unités de mémoire 16 aptes à stocker des données et des instructions de code de programme.

Optionnellement, le dispositif radar 6 comporte également ou est connecté à une interface homme-machine 18, comportant un écran de visualisation et des moyens d'interaction avec un opérateur.

Le système radar 8 est par exemple embarqué à bord d'un porteur de surveillance (non représenté), qui peut être fixe ou en mouvement.

Dans un mode de réalisation, une partie des modules du dispositif 6 est implémentée indépendamment, par exemple l'interface homme-machine, les unités de mémoire 16 et l'unité de calcul 14 sont externes au dispositif 6 et font partie d'un dispositif programmable dédié, par exemple un ordinateur.

Dans un mode de fonctionnement, le dispositif radar 6 fournit un signal radio électromagnétique à émettre selon la direction Z de pointage de l'antenne 4, et en fonction du signal réfléchi obtenu par le module récepteur 10, génère un signal numérique représentatif de la puissance du signal reçu par l'antenne en fonction d'une distance radiale, appelé ci-après signal de profil de puissance acquis.

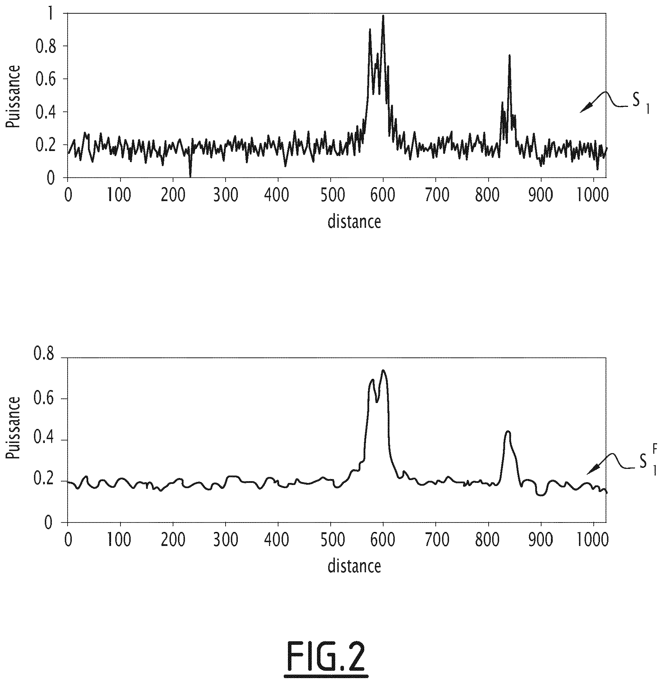

La figure 2 montre un exemple de signal numérique de profil de puissance acquis $S_1$, représentatif de la puissance normalisée (axe des ordonnées) du signal reçu par l'antenne 4 en fonction de la distance radiale d (axe des abscisses), entre un point de référence de l'antenne 4 et un point spatial de réflexion sur un axe parallèle à l'axe Z.

Le signal numérique de profil de puissance acquis est bruité et une détection directe d'une dimension radiale de la plateforme à partir de ce signal bruité risque d'être erronée.

Le signal numérique de profil de puissance $S_1$ comporte des zones dans lesquelles il a une faible amplitude, correspondant à du bruit et du fouillis de mer et des zones d'augmentation d'amplitude, correspondant à des obstacles réfléchissants sur le trajet des ondes électromagnétiques émises.

En particulier dans le cas où la plateforme 2 est un navire, les augmentations de puissance correspondent à des éléments de structure du navire, qui s'élèvent selon la direction Y perpendiculaire à la direction Z par rapport à la structure de base d'un navire qui est au niveau de la mer.

Par exemple, des éléments de structure métalliques réfléchissant s'élèvent à la proue et à la poupe d'un navire, permettant d'indiquer les extrémités du navire selon l'axe Z d'observation et d'en déduire la dimension radiale correspondant.

Avantageusement, selon l'invention, le signal numérique de profil de puissance acquis est filtré par un opérateur de filtrage permettant de minimiser l'influence du bruit comme expliqué en détail ci-après.

La figure 2 illustre schématiquement une version débruitée par filtrage médian $S_1^F$ correspondant au signal numérique de profil de puissance acquis $S_1$ Le signal $S_1^F$ est représenté dans le même référentiel que le signal numérique de profil de puissance acquis $S_1$, comportant la puissance normalisée du signal sur l'axe des ordonnées et la distance radiale par rapport à un point de référence de l'antenne 4 sur l'axe des abscisses.

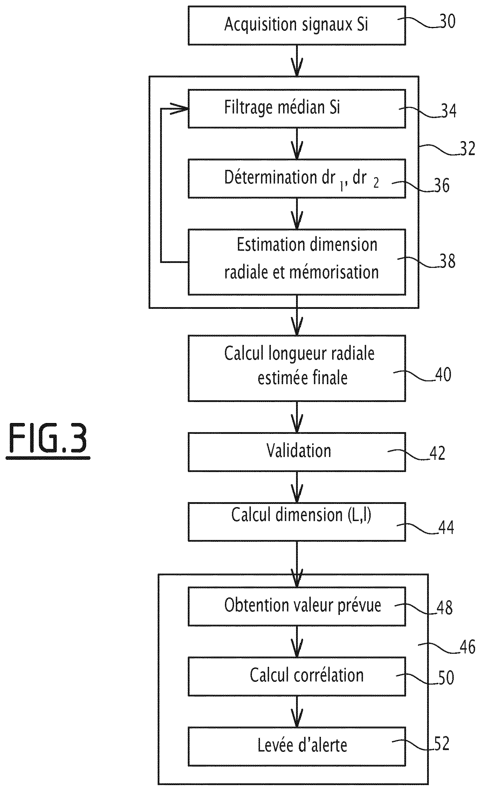

La figure 3 est un synoptique des principales étapes d'un procédé de calcul automatique d'une dimension parmi une dimension de longueur et une dimension de largeur d'une plateforme mobile selon un premier mode de réalisation.

Ce procédé est par exemple mis en œuvre par un logiciel apte à être exécuté par un processeur d'un dispositif programmable lorsqu'il est mis sous tension.

Lors d'une première étape 30, un nombre N de signaux numériques de profil de puissance est acquis par le système radar 8.

De préférence, dans le cas d'application de mesure automatique de dimension de navire dans le domaine maritime, le nombre N est strictement supérieur à 1, et de préférence supérieur à 10. En effet, l'acquisition des signaux étant bruitée, il est avantageux de disposer d'une pluralité de signaux pour obtenir une estimation fiable.

On obtient ainsi un ensemble de signaux numériques de profil de puissance $S_i$, $1 \leq i \leq N$.

Chaque signal de profil de puissance $S_i$ est composé d'échantillons $S_i(k)$, pour k compris entre 1 et P, P étant la longueur du signal $S_i$, chaque indice k correspondant à une distance radiale par rapport à un point de référence de l'antenne comme expliqué ci-dessus.

L'étape 30 d'acquisition est suivie d'une étape 32 de calcul d'une dimension radiale de la plateforme observée à partir de chaque signal numérique de profil de puissance acquis.

L'étape 32 est elle-même composée de plusieurs étapes.

D'abord, un opérateur de filtrage de réduction de bruit est appliqué au signal numérique de profil de puissance acquis à l'étape 34. Dans le cas d'application à la mesure automatique des dimensions d'un navire, le « bruit » désigne le fouillis de mer et le bruit thermique du RADAR.

Le filtrage de réduction de bruit est, par exemple, un filtrage par un filtre médian, dont le principe est de définir une fenêtre glissante de taille r choisie, de considérer le sous-signal intercepté par la fenêtre et de remplacer l'échantillon central de ce sous-signal par la valeur médiane du sous-signal.

De préférence, r est un nombre entier impair.

A l'issue de l'étape de filtrage, on obtient un signal numérique filtré $S_i^F$ de P échantillons $\{S_i^F(k), 1 \leq k \leq P\}$.

Ainsi, les valeurs d'amplitude extrêmes, correspondant à des perturbations de mesure, sont éliminées.

Plus la taille r de la fenêtre de filtrage est grande, plus le signal est lissé, ce qui permet d'atténuer le bruit, mais au risque de perdre des informations sur la cible détectée.

De préférence, r est inférieur ou égal à 10% de P. Par exemple, r=15.

Avantageusement, le filtrage médian est un filtrage d'implémentation simple, qui ne nécessite pas de ressources calculatoires importantes et pour lequel le temps de calcul est court.

En alternative, on applique un autre opérateur de filtrage que le filtrage médian, par exemple un filtre moyenne.

Ensuite, lors d'une étape 36, on détecte les deux extrémités de la plateforme surveillée selon l'axe d'observation, ces extrémités correspondant par hypothèse à des variations importantes du signal numérique filtré issu de l'étape 34.

Plus précisément, on détermine des distances radiales d'extrémité, à savoir une première distance radiale $dr_1$ correspondant à un premier pic de variation du signal numérique filtré et une deuxième distance radiale $dr_2$ correspondant à un deuxième pic de variation du signal numérique filtré.

La première distance $dr_1$ est la distance radiale la plus petite correspondant à un pic de variation du signal numérique filtré, et la deuxième distance $dr_2$ est la distance radiale la plus grande correspondant à un pic de variation du signal numérique filtré.

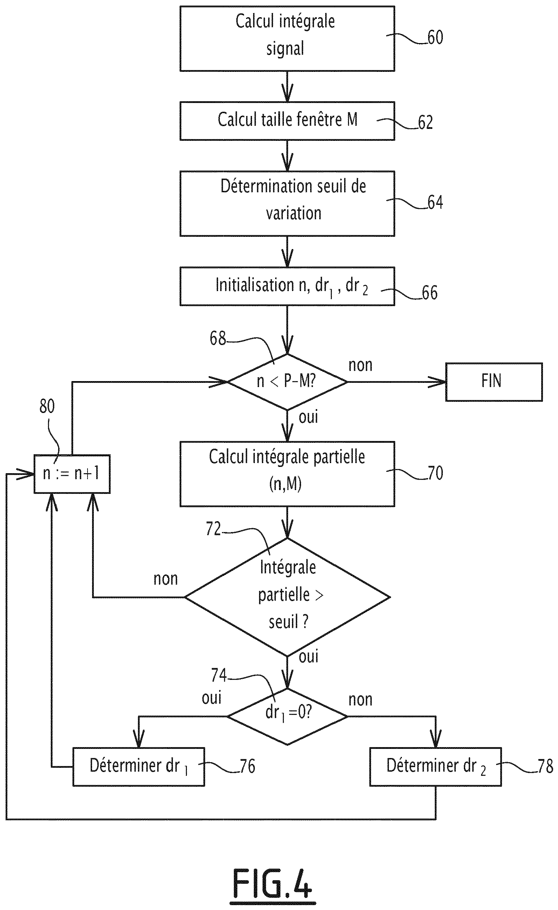

Pour cela, un calcul par intégrale discrète et seuillage est mis en œuvre dans un mode de réalisation illustré plus en détail à la figure 4.

La figure 4 décrit les principales étapes de la détermination des première et deuxième distances radiales selon un mode de réalisation de l'invention, pour un signal numérique filtré $S_i^F$ de P échantillons, chaque valeur d'échantillon étant égale à une puissance reçue normalisée pour une distance radiale du point de référence de l'antenne précédemment mentionné.

Lors d'une première étape 60, l'intégrale discrète $Int_t(S_i^F)$ du signal numérique $S_i^F$ est calculée :

$$Int_t(S_i^F) = \sum_{k=1}^{P} S_i^F(k)$$

Ensuite, une taille de fenêtre de calcul d'intégrale partielle est définie à l'étape 62, en fonction de la longueur P du signal numérique filtré :

$$M = \left\lfloor \frac{x}{100} \times P \right\rfloor$$

De préférence, x est inférieur ou égal à 10% de P.

Lors d'une étape 64 de détermination de seuil de variation, un seuil de variation $Int_{seuil}^i$ est fixé.

Dans un mode de réalisation, le seuil de varia-

tion $Int^i_{seuil}$ est une valeur constante $Int_{seuil}$ obtenue à partir d'une mémoire ou fournie par un opérateur, et utilisée pour chaque signal de profil de puissance $S_i$.

En variante, le seuil de variation $Int^i_{seuil}$ est calculé à partir de la valeur d'intégrale discrète $Int_t(S^F_i)$ :

$$Int^i_{seuil} = \frac{y}{100} \times Int_t(S^F_i)$$

où y est un nombre réel. De préférence, y est inférieur ou égal à 10% de P.

A l'étape 66 d'initialisation, un indice de boucle n est initialisé à 1, et les valeurs de distances radiales $dr_1$ et $dr_2$ sont initialisées à 0.

Il est vérifié si n est inférieur à P-M à l'étape suivante 68, et en cas de vérification négative, le procédé prend fin.

En cas de vérification positive, l'intégrale discrète partielle, égale à l'intégrale discrète du signal numérique filtré compris dans la fenêtre de M échantillons partant de l'échantillon d'indice n, est calculée à l'étape de calcul d'intégrale partielle 70 :

$$Int_p(S^F_i, n) = \sum_{k=n}^{n+M} S^F_i(k)$$

On vérifie ensuite à l'étape 72 si l'intégrale discrète partielle calculée dépasse le seuil de variation $Int^i_{seuil}$ préalablement calculé.

En cas de vérification positive à l'étape 72, on vérifie si $dr_1=0$ à l'étape 74, et en cas de vérification positive à l'étape 74, on passe à l'étape 76 de détermination de la première distance radiale à laquelle on met $dr_1$ à la distance radiale correspondant à l'indice $p_1 = n + \left\lfloor \dfrac{M}{2} \right\rfloor$, indice correspondant au milieu de la fenêtre de taille M de calcul de l'intégrale discrète partielle.

En cas de vérification négative à l'étape 74, on passe à l'étape 78 de détermination de la deuxième distance radiale à laquelle met la valeur $dr_2$ à la distance radiale correspondant à l'indice $p_1 = n + \left\lfloor \dfrac{M}{2} \right\rfloor$.

En cas de vérification négative à l'étape 72, cette étape 72 est suivie de l'étape 80 d'incrémentation de l'indice n de un, elle-même suivie de l'étape 68 précédemment décrite.

En outre, les étapes 76 et 78 sont toutes deux suivies de l'étape 80 d'incrémentation de l'indice n.

Ce procédé permet de déterminer la première distance $dr_1$ correspondant à la première valeur de variation dépassant le seuil de variation rencontrée en traitant les données dans l'ordre croissant des distances radiales, et la deuxième distance $dr_2$ correspondant à la dernière valeur de variation dépassant le seuil de variation rencontrée en traitant les données dans l'ordre croissant des distances radiales.

Bien entendu, diverses variantes d'implémentation à la portée de l'homme du métier sont envisageables pour le calcul des première et deuxième distances radiales.

De retour à la figure 3, on mémorise à l'issue de l'étape 36 la première distance $dr_1$ correspondant à une première extrémité de la plateforme, et la deuxième distance $dr_2$ correspondant à une deuxième extrémité de la plateforme.

On en déduit, à l'étape 38 d'estimation d'une dimension de longueur radiale de la plateforme visée, une valeur $L^i_R$ à partir du signal numérique $S_i$ par le calcul simple suivant :

$$L^i_R = dr_2 - dr_1$$

La longueur radiale estimée $L^i_R$ est mémorisée dans une mémoire du dispositif programmable mettant en œuvre le procédé de l'invention.

Les étapes 34 à 38 sont effectuées pour chaque signal numérique de profil de puissance acquis $S_i$, donc l'étape 38 est suivie de l'étape 34 avec une valeur de i incrémentée de un tant que i reste inférieur ou égal au nombre d'acquisitions N.

Une fois tous les signaux numériques de profil de puissance acquis traités, l'étape 38 est suivie d'une étape 40 de calcul d'une longueur radiale estimée finale à partir des valeurs de longueur radiale estimées, et d'une étape 42 de validation statistique de la longueur radiale estimée finale.

Lors de l'étape 40, la longueur radiale estimée finale $L_R$ est calculée comme étant égale à la valeur médiane des valeurs de longueur radiale estimées préalablement mémorisées.

En variante, on utilise un autre estimateur statistique pour déterminer la longueur radiale estimée finale $L_R$ à partir des longueurs radiales estimées $L^i_R$, par exemple la moyenne.

Ensuite, lors de l'étape de validation statistique 42, un histogramme des valeurs de longueur radiale estimées $L^i_R$ est calculé, et la dispersion des valeurs de l'histogramme par rapport à la valeur médiane est évaluée.

Des paramètres de dispersion sont calculés.

Dans un mode de réalisation, la dispersion est caractérisée par le paramètre $E_1$ défini à partir de l'écart interquartiles, dont le calcul est défini de la manière suivante :

$$E_1 = Q_3 - Q_1$$

Où $Q_1$ représente le premier quartile, c'est-à-dire la première valeur (dans l'ordre croissant) d'une série supérieure ou égale à 25% des données, et $Q_3$ représente le troisième quartile, c'est-à-dire la première valeur (dans l'ordre croissant) d'une série supérieure ou égale à 75% des données. En d'autres termes, l'écart interquartile indique la largeur de l'intervalle dans lequel se trouvent les 50% des valeurs centrales.

Selon une variante, une autre méthode consiste à évaluer l'écart entre la moyenne et la médiane des valeurs de l'histogramme. S'il y a une différence significative entre la moyenne et la médiane, c'est qu'il y a une forte dispersion et potentiellement plusieurs pôles ne permettant pas de statuer sur la longueur radiale estimée finale.

Bien entendu, on peut utiliser toute variante à la portée de l'homme du métier pour l'estimation de la dispersion de l'histogramme.

Ainsi, la cohérence des valeurs de longueur radiale estimées est évaluée, ce qui permet de valider ou d'invalider les estimations, et d'associer un score de confiance à la longueur radiale estimée finale $L_R$ de la plateforme.

Dans un mode de réalisation, plusieurs scores de confiance sont prédéfinis, un premier score correspondant à une confiance élevée, un deuxième score correspondant à une confiance moyenne et un troisième score correspondant à une confiance faible.

Lorsque le paramètre $E_1$ d'écart interquartiles est utilisé pour estimer la dispersion, on définit deux valeurs d'écart interquartiles de seuil, $E_{1,1}$ et $E_{1,2}$. Par exemple, les valeurs de seuil $E_{1,1}$ et $E_{1,2}$ sont déterminées préalablement, soit par calcul théorique, soit à partir d'observations de test.

Lorsque la valeur de $E_1$ est inférieure à $E_{1,1}$, le premier score est associé à la longueur radiale estimée finale $L_R$.

Lorsque la valeur de $E_1$ est supérieure à $E_{1,1}$ mais inférieure à une deuxième valeur de seuil $E_{1,2}$, le deuxième score est associé à la longueur radiale estimée finale $L_R$.

Lorsque la valeur de $E_1$ est supérieure à $E_{1,2}$ le troisième score est associé à la longueur radiale estimée finale $L_R$.

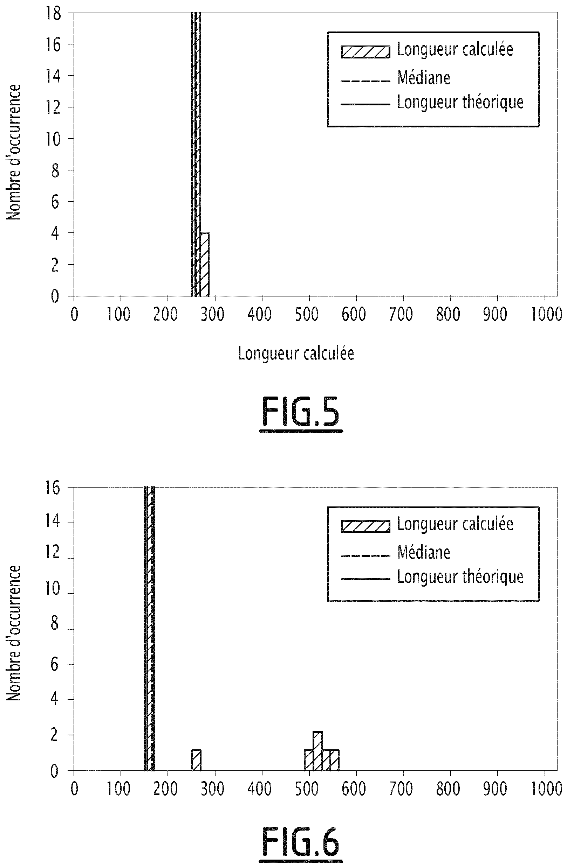

Plusieurs cas de figure sont illustrés aux figures 5 à 7.

Selon un premier cas de figure, l'histogramme comporte un seul pôle centré sur la valeur médiane, comme illustré schématiquement à la figure 5.

Dans ce premier cas, les estimations sont validées et l'écart interquartiles $E_1$ est inférieur au premier seuil $E_{1,1}$. On peut déduire que la médiane des valeurs de longueur radiale estimées est une estimation représentative de la longueur radiale $L_R$ de la plateforme. Le premier score de confiance est associé à la longueur radiale estimée finale.

Selon un deuxième cas de figure, l'histogramme comporte deux pôles, dont un pôle majoritaire centré sur la valeur médiane, et un pôle minoritaire, comme illustré schématiquement à la figure 6.

Dans ce deuxième cas, l'écart interquartiles $E_1$ est supérieur au premier seuil $E_{1,1}$ mais inférieur au deuxième seuil $E_{1,2}$, la longueur radiale estimée finale est validée, car elle appartient au pôle majoritaire, mais avec un score de confiance moins bon que dans le premier cas. On lui associe le deuxième score de confiance, inférieur au premier score de confiance.

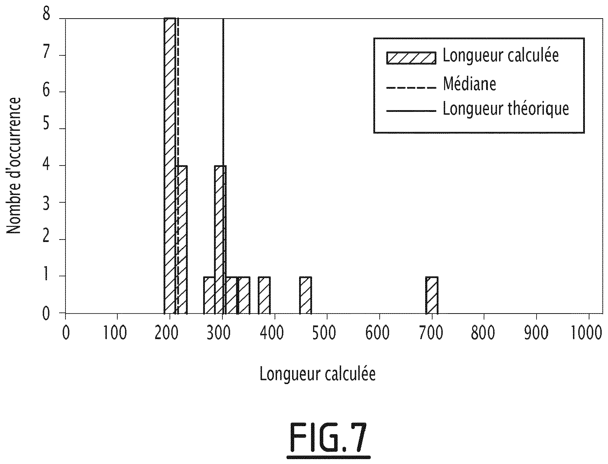

Selon un troisième cas de figure, l'histogramme comporte plusieurs pôles sans pôle majoritaire, et donc présente une dispersion importante, comme illustré schématiquement à la figure 7.

Dans ce troisième cas, l'écart interquartiles $E_1$ est supérieur au deuxième seuil $E_{1,2}$, la valeur médiane de la distribution des valeurs de longueur radiale estimées n'est pas une estimation représentative de la longueur radiale de la plateforme, les estimations sont bruitées. Un plus faible score de confiance que dans les autres cas sera associé à la longueur radiale estimée finale. On lui associe le troisième score de confiance, inférieur au deuxième score de confiance.

Ensuite, une dimension de la plateforme, parmi sa longueur ou sa largeur, est calculée à l'étape 44 en fonction de la longueur radiale estimée finale, $L_R$.

La sélection de la dimension estimée parmi la longueur L et la largeur I dépend de l'angle $\theta$ entre l'axe Z et la direction du vecteur de vitesse $\vec{V}$ de la plateforme 2.

Si la valeur de l'angle $\theta$ est inférieure ou égale à 45°, on estime la longueur L de la plateforme par :

$$L = \frac{L_R}{\cos(\theta)}$$

Si la valeur de l'angle $\theta$ est strictement supérieure à 45°, on estime la largeur I de la plateforme par :

$$l = L_R \times \sin(\theta)$$

Pour la dimension de la plateforme, L ou I, calculée ainsi automatiquement, on conserve le score de confiance préalablement évalué.

Ensuite, la dimension de la plateforme et son score de confiance sont fournis à une étape 46 de mise en œuvre de ces valeurs pour la surveillance.

Dans un mode de réalisation, lorsque la plateforme considérée est un navire, l'étape 46 comprend l'obtention, lors d'une étape 48, de la valeur correspondante prévue de longueur, notée $L_{init}$ ou de largeur, notée $l_{init}$, à partir des données de type AIS correspondant à un identifiant transmis par le navire 2.

Selon un mode de réalisation, l'étape 48 n'est réalisée que si le score de confiance attribué à la dimension de la plateforme calculée est supérieur ou égal à un seuil, par exemple supérieur ou égale au deuxième score décrit ci-dessus.

Une corrélation entre la valeur de longueur L (respectivement de largeur l) calculée automatiquement et la valeur de longueur $L_{init}$ (respectivement la valeur de largeur $l_{init}$) prévue est effectuée à l'étape 50, par exemple en calculant la valeur absolue de la différence entre ces deux valeurs, et en comparant cette différence à un seuil d'alerte prédéterminé.

Si la différence est supérieure au seuil d'alerte prédéterminé, une alerte est remontée à l'étape 52.

Par exemple, une alerte sonore ou visuelle est remontée via une interface homme-machine du dispositif programmable mettant en œuvre l'invention.

Selon une variante, l'étape 46 comprend l'affichage sur un écran de visualisation destiné à un opérateur de la dimension estimée de la plateforme et du score de confiance associé.

Avantageusement, le procédé de l'invention permet de calculer automatiquement à distance une dimension d'une plateforme en mouvement parmi sa longueur et sa largeur, et ainsi de valider ou non l'auto-déclaration fournie par cette plateforme.

Avantageusement, la dimension calculée automatiquement a un score de confiance associé, permettant d'améliorer la sécurité de la surveillance effectuée.

## Revendications

1. Procédé de calcul automatique d'une dimension d'une plateforme mobile, ladite dimension étant une dimension de longueur ou une dimension de largeur, comportant une étape d'émission, par un système radar, d'ondes radioélectriques en direction de ladite plateforme selon un axe d'émission prédéterminé et d'acquisition d'au moins un signal numérique de profil de puissance représentatif d'une puissance de signal réfléchi reçu en fonction d'une distance radiale selon ledit axe d'émission par rapport à un point de référence dudit système radar, comportant des étapes de :

   - application (34) d'un opérateur de filtrage sur le signal numérique de profil de puissance acquis ($S_i$) permettant d'obtenir un signal numérique filtré,
   - détermination (36) par calcul d'une première distance radiale ($dr_1$) correspondant à un premier pic de variation du signal numérique filtré et d'une deuxième distance radiale ($dr_2$) correspondant à un deuxième pic de variation du signal numérique filtré,
   - calcul (38-44) d'une dimension radiale de la plateforme en fonction desdites première et deuxième distance radiale,

   **caractérisé en ce que** l'étape de détermination par calcul d'une première distance radiale correspondant à un premier pic de variation du signal numérique filtré et d'une deuxième distance radiale correspondant à un deuxième pic de variation du signal numérique filtré comprend un calcul (70), effectué par application d'une fenêtre glissante, d'une valeur d'intégrale discrète partielle du signal numérique filtré compris dans ladite fenêtre glissante et une comparaison (72) de la valeur d'intégrale partielle à un seuil de variation prédéterminé.

2. Procédé selon la revendication 1, caractérisé en qu'il comprend l'acquisition d'une pluralité de signaux numériques de profil de puissance, et en ce que les étapes d'application d'un opérateur de filtrage et de détermination d'une première et d'une deuxième distance radiale sont appliquées pour chaque signal numérique de profil de puissance acquis.

3. Procédé selon l'une des revendications 1 ou 2, **caractérisé en ce que** le calcul d'une dimension radiale de la plateforme comprend le calcul (38) d'une valeur de longueur radiale estimée pour chaque signal numérique de profil de puissance acquis ($S_i$) en effectuant une différence entre la deuxième distance radiale et la première distance radiale, et la mémorisation de la valeur de longueur radiale estimée à partir de chaque signal numérique de profil de puissance acquis.

4. Procédé selon la revendication 3, **caractérisé en ce qu'**il comprend un calcul (40) d'une longueur radiale estimée finale à partir des valeurs de longueur radiale estimées mémorisées.

5. Procédé selon la revendication 4, **caractérisé en ce que** la longueur radiale estimée finale est égale à la médiane des valeurs de longueur radiale estimées mémorisées.

6. Procédé selon l'une des revendications 4 ou 5, **caractérisé en ce qu'**il comprend une étape de validation statistique (42) des valeurs de longueur radiale estimées mémorisées, et une étape d'attribution d'un score de confiance associé à la longueur radiale estimée finale.

7. Procédé selon la revendication 6, **caractérisé en ce que** l'étape de validation statistique (42) comprend un calcul d'histogramme des valeurs de longueur radiale estimées, et un calcul d'au moins un paramètre de dispersion associé audit histogramme.

8. Procédé selon l'une quelconque des revendications 1 à 7, **caractérisé en ce que** la première distance radiale ($dr_1$) est la distance radiale la plus petite correspondant à un pic de variation du signal numérique filtré, et la deuxième distance radiale ($dr_2$) est la distance radiale la plus grande correspondant à un pic de variation du signal numérique filtré.

9. Procédé selon la revendication 1, **caractérisé en ce que** le seuil de variation prédéterminé est calculé en fonction de l'intégrale discrète totale du signal numérique filtré.

10. Procédé selon l'une quelconque des revendications 1 à 9, **caractérisé en ce qu'**il comporte en outre une étape de calcul (44) d'une dimension de longueur ou de largeur en fonction de la dimension radiale calculée et une étape d'estimation de corrélation (50) entre la dimension de longueur ou de largeur calculée et une dimension de longueur ou de largeur prévue, et une levée d'alerte (52) en fonction du résultat de l'étape d'estimation de corrélation.

11. Programme d'ordinateur comportant des instructions logicielles qui, lorsqu'elles sont mises en œuvre par un dispositif programmable, mettent en œuvre un procédé de calcul automatique d'une dimension d'une plateforme mobile, ladite dimension étant une dimension de longueur ou une dimension de largeur, le procédé étant conforme aux revendications 1 à 10.

12. Support d'enregistrement d'informations, **caractérisé en ce qu'**il comporte des instructions logicielles pour l'exécution d'un procédé conforme aux revendications 1 à 10, lorsque ces instructions sont exécutées par un dispositif programmable.

13. Système de calcul automatique d'une dimension d'une plateforme mobile, ladite dimension étant une dimension de longueur ou une dimension de largeur, comportant une antenne d'émission d'ondes radioélectriques en direction de ladite plateforme selon un axe d'émission prédéterminé et un module d'acquisition d'au moins un signal numérique de profil de puissance représentatif d'une puissance de signal réfléchi reçu en fonction d'une distance radiale selon ledit axe d'émission par rapport à un point de référence de l'antenne, comportant une unité (14) de calcul et de traitement comportant un processeur et une ou plusieurs unités de mémoire (16) aptes à stocker des données et des instructions de code de programme, mettant en oeuvre :

- un module d'application d'un opérateur de filtrage sur le signal numérique de profil de puissance acquis ($S_i$) permettant d'obtenir un signal numérique filtré,
- un module de détermination par calcul d'une première distance radiale ($dr_1$) correspondant à un premier pic de variation du signal numérique filtré et d'une deuxième distance radiale ($dr_2$) correspondant à un deuxième pic de variation du signal numérique filtré,
- un module de calcul d'une dimension radiale de la plateforme en fonction desdites première et deuxième distance radiale,

**caractérisé en ce que** le module de détermination par calcul d'une première distance radiale correspondant à un premier pic de variation du signal numérique filtré et d'une deuxième distance radiale correspondant à un deuxième pic de variation du signal numérique filtré effectue un calcul, par application d'une fenêtre glissante, d'une valeur d'intégrale discrète partielle du signal numérique filtré compris dans ladite fenêtre glissante et une comparaison de la valeur d'intégrale partielle à un seuil de variation prédéterminé.

**Patentansprüche**

1. Verfahren zum automatischen Berechnen einer Abmessung einer mobilen Plattform, wobei die besagte Abmessung eine Längenabmessung oder eine Breitenabmessung ist, aufweisend einen Schritt des Sendens, mittels eines Radarsystems, von elektromagnetischen Wellen in Richtung der besagten Plattform entlang einer vorbestimmten Sendeachse und des Erlangens von mindestens einem digitalen Leistungsprofilsignal, welches repräsentativ ist für eine empfangene reflektierte Signalleistung in Abhängigkeit von einem Radialabstand entlang der besagten Sendeachse mit Bezug auf einen Referenzpunkt des besagten Radarsystems, welches die folgenden Schritte aufweist:

- Anwenden (34) eines Filteroperators auf das erlangte digitale Leistungsprofilsignal ($S_i$), was ein Erhalten eines gefilterten digitalen Signals ermöglicht,
- Ermitteln (36), mittels Berechnens, von einem ersten Radialabstand ($dr_1$), welcher zu einem ersten Variationsspitzenwert des gefilterten digitalen Signals korrespondiert, und von einem zweiten Radialabstand ($dr_2$), welcher zu einem zweiten Variationsspitzenwert des gefilterten digitalen Signals korrespondiert,
- Berechnen (38-44) von einer Radialabmessung der Plattform in Abhängigkeit von dem besagten ersten und dem besagten zweiten Radialabstand,

**dadurch gekennzeichnet, dass** der Schritt des Ermittelns, mittels Berechnens, von einem ersten Radialabstand, welcher zu einem ersten Variationsspitzenwert des gefilterten digitalen Signals korrespondiert, und von einem zweiten Radialabstand, welcher zu einem zweiten Variationsspitzenwert des gefilterten digitalen Signals korrespondiert, aufweist ein Berechnen (70), welches mittels Anwendens von einem gleitenden Fenster durchgeführt wird, von einem partiellen diskreten Integralwert des gefilterten digitalen Signals, welches in dem besagten gleitenden Fenster enthalten ist, und ein Vergleichen (72) des partiellen Integralwerts mit einem vorbestimmten Variationsschwellenwert.

2. Verfahren gemäß Anspruch 1, **dadurch gekennzeichnet, dass** es das Erlangen von einer Mehrzahl von digitalen Leistungsprofilsignalen aufweist, und dadurch, dass die Schritte des Anwendens eines Filteroperators sowie des Ermittelns von einem ersten und von einem zweiten Radialabstand für jedes erlangte digitale Leistungsprofilsignal angewendet werden.

3. Verfahren gemäß einem der Ansprüche 1 oder 2, **dadurch gekennzeichnet, dass** das Berechnen von einer Radialabmessung der Plattform aufweist das Berechnen (38) von einem abgeschätzten Radiallängenwert für jedes erlangte digitale Leistungssignal ($S_i$) mittels Bildens einer Differenz zwischen dem zweiten Radialabstand und dem ersten Radialabstand und das Speichern des abgeschätzten Radiallängenwerts ausgehend von jedem erlangten digitalen Leistungsprofilsignal.

4. Verfahren gemäß Anspruch 3, **dadurch gekennzeichnet, dass** es aufweist ein Berechnen (40) von einer finalen abgeschätzten Radiallänge ausgehend von den gespeicherten abgeschätzten Radiallängenwerten.

5. Verfahren gemäß Anspruch 4, **dadurch gekennzeichnet, dass** die finale abgeschätzte Radiallänge gleich ist zum Median der gespeicherten abgeschätzten Radiallängenwerte.

6. Verfahren gemäß einem der Ansprüche 4 oder 5, **dadurch gekennzeichnet, dass** es aufweist einen Schritt des statistischen Validierens (42) der gespeicherten abgeschätzten Radiallängenwerte und einen Schritt des Zuordnens eines Vertrauenswerts, welcher mit der finalen abgeschätzten Radiallänge assoziiert ist.

7. Verfahren gemäß Anspruch 6, **dadurch gekennzeichnet, dass** der Schritt des statistischen Validierens (42) aufweist ein Berechnen von einem Histogramm der abgeschätzten Radiallängenwerte und ein Berechnen von mindestens einem Dispersionsparameter, der mit dem besagten Histogramm assoziiert ist.

8. Verfahren gemäß irgendeinem der Ansprüche 1 bis 7, **dadurch gekennzeichnet, dass** der erste Radialabstand ($dr_1$) der kleinste Radialabstand ist, der zu einem Variationsspitzenwert des gefilterten digitalen Signals korrespondiert, und der zweite Radialabstand ($dr_2$) der größte Radialabstand ist, der zu einem Variationsspitzenwert des gefilterten digitalen Signals korrespondiert.

9. Verfahren gemäß Anspruch 1, **dadurch gekennzeichnet, dass** der vorbestimmte Variationsschwellenwert berechnet wird in Abhängigkeit von dem gesamten diskreten Integral des gefilterten digitalen Signals.

10. Verfahren gemäß irgendeinem der Ansprüche 1 bis 9, **dadurch gekennzeichnet, dass** es ferner aufweist einen Schritt des Berechnens (44) von einer Längen- oder Breitenabmessung in Abhängigkeit von der berechneten Radialabmessung und einen Schritt des Abschätzens der Korrelation (50) zwischen der berechneten Längen- oder Breitenabmessung und einer vorhergesehenen Längen- oder Breitenabmessung und ein Auslösen eines Alarms (52) in Abhängigkeit des Ergebnisses des Schrittes des Abschätzens der Korrelation.

11. Computerprogramm, welches Softwareanweisungen aufweist, welche, wenn sie mittels einer programmierbaren Vorrichtung durchgeführt werden, ein Verfahren zum automatischen Berechnen von einer Abmessung einer mobilen Plattform durchführen, wobei die besagte Abmessung eine Längenabmessung oder eine Breitenabmessung ist, wobei das Verfahren den Ansprüchen 1 bis 10 entspricht.

12. Informationsaufzeichnungsmedium, welches **dadurch gekennzeichnet ist, dass** es Softwareanweisungen zum Ausführen eines Verfahrens, welches den Ansprüchen 1 bis 10 entspricht, aufweist, wenn diese Anweisungen mittels einer programmierbaren Vorrichtung ausgeführt werden.

13. System zum automatischen Berechnen einer Abmessung einer mobilen Plattform, wobei die besagte Abmessung eine Längenabmessung oder eine Breitenabmessung ist, aufweisend eine Antenne zum Senden von elektromagnetischen Wellen in Richtung der besagten Plattform entlang einer vorbestimmten Sendeachse und ein Modul zum Erlangen von mindestens einem digitalen Leistungsprofilsignal, welches repräsentativ ist für eine empfangene reflektierte Signalleistung in Abhängigkeit von einem Radialabstand entlang der besagten Sendeachse mit Bezug auf einen Referenzpunkt der Antenne, welches aufweist eine Einheit (14) zum Berechnen und zum Verarbeiten, welche einen Prozessor und eine oder mehrere Speichereinheiten (16) aufweist, welche imstande sind, um Daten und Programmcodeanweisungen zu speichern, welches verwendet:

- ein Modul zum Anwenden eines Filteroperators auf das erlangte digitale Leistungsprofilsignal (Si), was ein Erhalten eines gefilterten digitalen Signals ermöglicht,
- ein Modul zum Ermitteln, mittels Berechnens, von einem ersten Radialabstand ($dr_1$), welcher zu einem ersten Variationsspitzenwert des gefilterten digitalen Signals korrespondiert, und von einem zweiten Radialabstand ($dr_2$), welcher zu einem zweiten Variationsspitzenwert des gefilterten digitalen Signals korrespondiert,
- ein Modul zum Berechnen von einer Radialabmessung der Plattform in Abhängigkeit des besagten ersten und des besagten zweiten Radialabstandes,

**dadurch gekennzeichnet, dass** das Modul zum Ermitteln, mittels Berechnens, von einem ersten Radialabstand, welcher zu einem ersten Variationsspitzenwert des gefilterten digitalen Signals korrespondiert, und von einem zweiten Radialabstand, welcher zu einem zweiten Variationsspitzenwert des gefilterten digitalen Signals korrespondiert, durchführt ein Berechnen, mittels Anwendens von einem gleitenden Fenster, von einem partiellen diskreten Integralwert des gefilterten digitalen Signals, welches in dem besagten gleitenden Fenster enthalten ist, und ein Vergleichen des partiellen Integralwerts mit einem vorbestimmten Variationsschwellenwert.

**Claims**

1. A method for automatically computing a dimension of a moving platform, said dimension being a length dimension or a width dimension, including a step for sending, by a radar system, electromagnetic radio waves toward said platform along a predetermined transmission axis and acquiring at least one digital power profile signal representative of a received reflected signal power as a function of a radial distance along said transmission axis relative to a reference point of said radar system, comprising the following steps:

- applying (34) a filtering operator on the acquired digital power profile signal ($S_i$) making it possible to obtain a filtered digital signal,
- determining (36), by computation, a first radial distance ($dr_1$) corresponding to a first variation peak of the filtered digital signal and a second radial distance ($dr_2$) corresponding to a second variation peak of the filtered digital signal,
- computing (38-44) a radial dimension of the platform as a function of said first and second radial distances,

**characterized in that** the step for determining, by computation, a first radial distance corresponding to a first variation peak of the filtered digital signal and a second radial distance corresponding to a second variation peak of the filtered digital signal comprises a computation (70), done by applying a sliding window, of a partial discrete integral value of the filtered digital signal comprised in said sliding window and a comparison (72) of the partial integral value to a predetermined variation threshold.

2. The method according to claim 1, **characterized in that** it comprises acquiring a plurality of digital power profile signals, and **in that** the steps for applying a filtering operator and determining a first and second radial distance are applied for each acquired digital power profile signal.

3. The method according to one of claims 1 or 2, **characterized in that** the computation of a radial dimension of the platform comprises computing (38) an estimated radial length value for each acquired digital power profile signal ($S_i$) by obtaining a difference between the second radial distance and the first radial distance, and storing the estimated radial length value for each acquired digital power profile signal.

4. The method according to claim 3, **characterized in that** it comprises computing (40) a final estimated radial length from stored estimated radial length values.

5. The method according to claim 4, **characterized in that** the final estimated radial length is equal to the median of the stored estimated radial length values.

6. The method according to one of claims 4 or 5, **characterized in that** it comprises a step for statistical validation (42) of the stored estimated radial length values, and a step for assigning a confidence score associated with the final estimated radial length.

7. The method according to claim 6, **characterized in that** the statistical validation step (42) comprises computing a histogram of the estimated radial length values, and computing at least one dispersion parameter associated with said histogram.

8. The method according to any one of claims 1 to 7, **characterized in that** the first distance ($dr_1$) is the smallest radial distance corresponding to a variation peak of the filtered digital signal, and the second radial distance ($dr_2$) is the largest radial distance corresponding to a variation peak of the filtered digital signal.

9. The method according to claim 1, **characterized in that** the predetermined variation threshold is computed as a function of the total discrete interval of the filtered digital signal.

10. The method according to any one of claims 1 to 9, **characterized in that** it further includes a step for computing (44) a length dimension or a width dimension as a function of the computed radial dimension and a step for estimating the correlation (50) between the computed length or width dimension and an anticipated length or width dimension, and raising an alert (52) as a function of the result of the estimate correlation step.

11. A computer program including software instructions which, when executed by a programmable device, carry out a method for the automatic computation of a dimension of a moving platform, said dimension being a length dimension or a width dimension, the method being carried according to claims 1 to 10.

12. An information recording medium, **characterized in that** it includes software instructions for implementing a method according to claims 1 to 10, when those instructions are executed by a programmable device.

13. A system for automatically computing a dimension of a moving platform, said dimension being a length dimension or a width dimension, including an antenna for sending electromagnetic radio waves toward said platform along a predetermined transmission axis and a module for acquiring at least one digital power profile signal representative of a received reflected signal power as a function of a radial distance along said transmission axis relative to a reference point of the antenna, comprising a computing and processing unit (14) including a processor and one or several memory units (16) able to store data and program code instructions, implementing:

    - a module for applying a filtering operator on the acquired digital power profile signal ($S_i$) making it possible to obtain a filtered digital signal,
    - a module for determining, by computation, a first radial distance ($dr_1$) corresponding to a first variation peak of the filtered digital signal and a second radial distance ($dr_2$) corresponding to a second variation peak of the filtered digital signal,
    - a module for computing a radial dimension of the platform as a function of said first and second radial distances,

    **characterized in that** the module for determining, by computation, a first radial distance corresponding to a first variation peak of the filtered digital signal and a second radial distance corresponding to a second variation peak of the filtered digital signal carries out a computation (70), done by applying a sliding window, of a partial discrete integral value of the filtered digital signal comprised in said sliding window and a comparison (72) of the partial integral value to a predetermined variation threshold.

FIG.1

## FIG.2

Acquisition signaux Si —30

Filtrage médian Si —34

—32

Détermination dr$_1$, dr$_2$ —36

Estimation dimension
radiale et mémorisation —38

Calcul longueur radiale
estimée finale —40

**FIG.3**

Validation —42

Calcul dimension (L,l) —44

Obtention valeur prévue —48

—46

Calcul corrélation —50

Levée d'alerte —52

$$\underline{\text{FIG.4}}$$

## FIG.5

## FIG.6

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE LIAO KUO et al.** Extraction of Radar Target Length Based on High Resolution Range Profile. *International Conférence on Electrical and Control Engineering,* 2010

- **DE S. MUSMAN et al.** Automatic Recognition of ISAR Ship Images. *IEEE Transactions on Aerospace and Electronic Systems,* 1996, vol. 32 (4